# EUROPEAN PATENT APPLICATION

(11) **EP 0 896 121 A1**
(43) Date of publication of application: **10.02.1999**
(21) Application number: 97919725.8
(22) Date of filing: 25.04.1997
(51) Int. Cl.: E06B 9/24

(54) **LIGHT-CONTROLLABLE HEAT INSULATING WINDOW**

(30) Priority: 26.04.1996 JP 106974/96; 26.04.1996 JP 106975/96; 10.05.1996 JP 116198/96; 19.02.1997 JP 34794/97
(71) Applicant: KANEKA CORPORATION, Osaka-shi, Osaka 530 (JP)
(72) Inventor: DANNO, Kazuhisa, Otsu-shi, Shiga 520 (JP); IMAJO, Keiji, Otsu-shi, Shiga 520-02 (JP)
(74) Representative: VOSSIUS & PARTNER
(86) International application number: JP9701482
(87) International publication number: WO9741329

(57) **Abstract**

A heat insulating window 1 which has a window frame 2, and a frame 8 fixed to an inner side of the window frame, and which is formed by fitting light control glass 7 as glass pane in the frame 8. The window frame 2 comprises a heat insulating frame having an indoor side frame member 4, an outdoor side frame member 5, and a heat insulating material 6 interposed between the indoor and outdoor side frame members 4 and 5, while the frame 8 comprises a heat insulating frame having an indoor side frame member 9, an outdoor side frame member 10, and a heat insulating material 12 interposed between the indoor and outdoor side frame members 9 and 10. Thus, a heat insulating window capable of reducing the escape and entry of heat from and into a room to a minimum level, reducing the air-conditioning cost and improving the comfortableness to live in the room, and having light-controllability is provided.

## Description

### BACKGROUND OF THE INVENTION

### 1. Field of the Invention:

The present invention relates to a light-controllable heat insulating window.

### 2. Description of Related Art:

Generally, there has widely been known light-controllable substances in each of which the light transmittance is changed by a change in temperature, a change in voltage, a change in light or the like and recently, there have been proposed various technologies in which a light-controllable glass sealing a light-controllable substance between two sheets of plate glass is used as glass pane and the technologies have been reduced into practice. For example, there has been spotlighted light-controllable glass for glass pane in which a light-controllable substance having a light transmittance that is changed by a change in temperature, is sealed between two sheets of plate glass and when solar ray is intensified and outer air temperature is elevated, the light-controllable substance is clouded and a light shielding state is automatically brought about since the glass is excellent in durability and light shielding performance and inexpensive.

However, according to the light-controllable glass, a light transmitting state and a light shielding state are switched depending on outer air temperature and accordingly, there poses a problem in which, for example, privacy in the night time where the outer air temperature is lowered cannot be protected only by the light-controllable glass.

Hence, there also has been proposed a constitution as disclosed in Japanese Unexamined Patent Publication No. JP-A-6-80446 in which heating means which has a conductive thin film, resistor line or the like is sealed between two sheets of glass plate along with a light-controllable substance and the cloud point of the light-controllable substance is set to be higher than outer air temperature and the light-controllable substance is forcibly heated by the heating means for which a total face of the light-controllable glass is switched forcibly to the light shielding state.

Further, there has been proposed light-controllable glass as disclosed in Japanese Unexamined Patent Publication No. JP-A-6-255016 in which two kinds of light-controllable substances having different compositions are sealed between two sheets of glass plate and image information can be displayed by a difference in degrees of cloudiness of the substances.

Meanwhile, there has widely been spread a window for a building in which an outer peripheral portion of glass pane is surrounded by a frame made of an aluminum alloy and the frame is integrated to a window frame made of an aluminum alloy slidably or openably and closably.

Meanwhile, there is provided an operation of restraining a rise in room temperature in the summer time or the like by preventing solar ray from transmitting into a room as an advantage of using light-controllable glass for glass pane. However, even with light-controllable glass having such an excellent function, it has been found that a sufficient function cannot be achieved when it is actually used for glass pane. The inventors have found as a result of an intensive study in respect of the cause that when light-controllable glass is integrated to an aluminum window frame, heat transfer cannot be sufficiently shielded at the window frame portion and even when solar ray is shielded with great effort by the light-controllable glass, room temperature cannot be efficiently controlled.

Further, a light-controllable substance in which the light transmittance is changed by a change in temperature, is basically changed selectively to be transparent or cloudy and therefore, according to the conventional light-controllable glass, even when heating means as described in Japanese Unexamined Patent Publication No. JP-A-6-80446 is used, a total face of light-controllable glass can be switched only in two ways of a light transmitting state and a light shielding state and accordingly, there poses a problem in which the light-controllable glass cannot be used in a way where while shielding solar ray by shielding an upper half of the window, sceneries are enjoyed from a light transmitting portion of a lower half of the window as in a blind in an electric train or the like or a way in which light is shielded at a right half or a left half of glass pane as in a curtain.

Further, although the light-controllable glass described in Japanese Unexamined Patent Publication No. JP-A-6-255016 is constituted such that letters, diagrams, abstract patterns or the like are displayed as image information, the glass is not so much practical as glass pane for an architecture of an actual house or a building or the like That is, in these architectures, it is an important problem how to set an amount of light transmittance from a window in order to reduce heating or cooling cost or adjust room environment and this kind of problem cannot be resolved by the light-controllable glass described in the publication.

### SUMMARY OF THE INVENTION

According to a heat insulating window of the present invention, a window frame and a frame are constituted by extruded articles made of synthetic resin material or wood having small heat conductivity, or even in the case where a window frame and a frame are constituted by extruded articles made of an aluminum alloy, the heat insulating window is constituted to divide into division frames on an inner side of a room and on an outer side of the room and therefore, destruction of light-controllable glass caused by lowering of outer temperature can effectively be prevented. That is, light-controllable glass is provided with a large solar ray absorption rate and accordingly, temperature rise in the case of receiving direct sun light is larger than that of float plate glass and when the light-controllable glass is integrated to a window frame or a frame having a large heat conductivity which is made of an aluminum alloy or the like, in the case where outer air temperature is lowered in the winter time or the like, a difference between temperatures at a peripheral edge portion of the light-controllable glass adjacent to the window frame or the frame and at a central portion of the light-controllable glass, becomes large and so-to-speak "heat crack" where stress is caused in the glass face and the glass portion is destroyed or cracked, is liable to cause. Therefore, when the window frame and the frame excellent in heat insulating performance are used as in the heat insulating window according to the present invention, the difference between temperatures at the peripheral edge portion and the central portion of the light-controllable glass becomes small and destruction of the light-controllable glass by the heat crack is prevented.

According to Claim 1 of the present invention, there is provided a heat insulating window having a light controlling performance, having a window frame and a frame integrated to an inner side of the window frame and integrated with a light-controllable glass as a glass pane at the frame wherein the window frame and the frame are constituted by extruded articles made of a synthetic resin material.

According to the heat insulating window, the light-controllable glass is used as the glass pane and therefore, the light transmittance of the glass pane is changed in accordance with outer air temperature or the like and an amount of incidence of solar ray into a room is adjusted and room temperature is adjusted. Further, the window frame and the frame are constituted by extruded articles made of synthetic resin material and therefore, the heat conductivities of the window frame and the frame become small and transfer of heat to and from the room is cut. Further, members constituting respective sides of the window frame and the frame can be produced continuously by extrusion and accordingly, the cost of fabricating a total of the heat insulating window can be reduced.

According to Claim 2 of the present invention, there is provided a heat insulating window having a light controlling performance, having a window frame and a frame integrated to an inner side of the window frame and integrated with a light-controllable glass as a glass pane at the frame wherein one of the window frame and the frame is constituted by wood and other thereof is constituted by either of an extruded article made of a synthetic resin material or wood.

According to the heat insulating window, the light-controllable glass is used as the glass pane and therefore, an operation similar to that in Claim 1 is provided. Further, one of the window frame and the frame is constituted by wood, other thereof is constituted by the extruded article made of synthetic resin material or wood and accordingly, the heat conductivities of the window frame and the frame become small and transfer of heat to and from a room is cut. Further, members constituting respective sides of the window frame and the frame are extruded articles made of synthetic resin material or wood and accordingly, the cost of fabricating a total of the heat insulating window can be reduced.

According to Claim 3 of the present invention, there is provided a heat insulating window having a light controlling performance having a window frame and a frame integrated to an inner side of the window frame and integrated with a light-controllable glass as a glass pane at the frame wherein each of the window frame and the frame is constituted by a heat insulating frame having a room inner side division frame and a room outer side division frame both comprising extruded articles and a heat insulating member interposed between the both division frames.

According to the heat insulating window, the light-controllable glass is used as the glass pane and accordingly, an operation similar to that in Claim 1 is provided. Further, each of the window frame and the frame is constituted by the heat insulating frame having the room inner side division frame, the room outer side division frame and the heat insulating member interposed between the both division frames and therefore, transfer of heat to and from a room can be cut.

According to Claim 4 of the present invention, there is provided a heat insulating window having a light controlling performance having a window frame and a frame integrated to an inner side of the window frame and integrated with a light-controllable glass as a glass pane at the frame wherein one of the window frame and the frame is constituted by a heat insulating frame having a room inner side division frame and a room outer side division frame both comprising extruded articles and a heat insulating member interposed between the both division frames and other thereof is constituted by either of an extruded article made of a synthetic resin material or wood.

According to the heat insulating window, the light-controllable glass is used as the glass pane and therefore, an operation similar to that in Claim 1 is provided. Further, one of the window frame and the frame is constituted by the heat insulating frame having the room inner side division frame, the room outer side division frame and the heat insulating member interposed between the both division frames and other is constituted by the extruded article made of synthetic resin material or wood and therefore, transfer of heat to and from a room can be cut.

According to Claim 5 of the present invention, there is provided the heat insulating window having a light controlling performance according to Claims 3 or 4 wherein at least one of the room inner side division frame and the room outer side division frame of the heat insulating frame is constituted by an extruded article made of a synthetic resin material and the heat insulating member between the both division frames may be omitted. By such a constitution, while the heat insulating member is omitted and a constitution of the heat insulating frame is simplified, transfer of heat to and from a room at the heat insulating frame portion can effectively be cut by the frame on an inner side of a room or an outer side of the room made of synthetic resin material.

According to Claim 6 of the present invention, there is provided the heat insulating window having a light controlling performance according to any one of Claims 1 to 5 wherein a hollow profile extruded article is preferably used as the extruded article. That is, according to the hollow profile extruded article, the heat insulating performance of the window frame or the frame is further promoted by the hollow portion, the article can be constituted in light weight without lowering the strength and further, the cost of fabricating the window frame or the frame can be reduced.

According to Claim 7 of the present invention, there is provided the heat insulating window having a light controlling performance according to any one of Claims 3 to 5 wherein a hollow profile extruded article made of an aluminum alloy is preferably used as the room outer side division frame. In this case, an operation similar to that of the heat insulating window according to Claim 6 is provided, the room outer side division frame made of aluminum alloy is arranged on the outer side of a room and therefore, fireproof performance against flying sparks from houses in the neighborhood can be promoted.

According to Claim 8 the present invention, there is provided the heat insulating window having a light controlling performance according to any one of Claims 1 to 7 wherein the heat insulating window may be integrated with a sealed insulating glass at least one sheet of which comprises the light-controllable glass as the glass pane. By such a constitution, an air layer is formed between the light-controllable glass and general glass and the air layer operates as a heat insulating space and heat insulating performance and sound isolating performance of the glass pane are promoted.

According to Claim 9 of the present invention, there is provided the heat insulating window having a light controlling performance according to Claim 8 wherein the light-controllable glass is preferably arranged on an inner side of a room. That is, when the light-controllable glass is at a temperature near to room temperature and the thermotropic light-controllable glass in which the light transmittance is changed by temperature is used, the light-controllable glass can be switched to a light shielding state and a light transmitting state at an optimum temperature in accordance with room temperature.

According to Claim 10 of the present invention, there is provided the heat insulating window having a light controlling performance according to any one of Claims 1 to 9 wherein the heat insulating window is conceivably integrated with a sealed insulating glass including two sheets or more of light-controllable glasses having different light controlling conditions as the glass pane. By such a constitution, the light transmittance can be changed in steps in accordance with outer air temperature or the like or an amount of incidence of solar ray into a room can be adjusted in accordance with a plurality of light controlling conditions such as a change in temperature, a change in light amount and so on.

According to Claim 11 of the present invention, there is provided the heat insulating window having a light controlling performance according to any one of Claims 1 to 10 wherein a plurality of layers of light-controllable substances having different light controlling conditions are laminated as the light-controllable glass. By such a constitution, the light transmittance can be changed in steps in accordance with outer air temperature or the like and an amount of incidence of solar ray into a room can be adjusted in accordance with a plurality of light controlling conditions such as a change in temperature, a change in light amount and so on without increasing a thickness of a total of the glass pane.

According to Claim 12 of the present invention, there is provided the heat insulating window having a light controlling performance according to any one of Claims 1 to 11 wherein a material having a cloud point is preferably sealed between two sheets of plate glasses or a light-controllable substance in a solid state having a cloud point is preferably used as the light-controllable glass. That is, the light-controllable glass is brought into a transparent state when the temperature becomes the cloud point or lower and brought into a light shielding state when the temperature exceeds the cloud point and accordingly, therefore, the light-controllable glass is brought into the light shielding state when outer air temperature or room temperature becomes high and solar ray is prevented from transmitting into a room.

According to Claim 13 of the present invention, there is provided the heat insulating window having a light controlling performance according to any one of Claims 1 to 12 wherein a light-controllable substance comprising at least a water-soluble polymer having an average molecular weight of 10,000 through 200,000, an amphipathic substance having a molecular weight of 3,000 or less and water is preferably used as the light-controllable glass. That is, such a light-controllable substance can be obtained inexpensively and therefore, it is preferable in reducing the cost of fabricating the light-controllable glass.

According to Claim 14 of the present invention, there is provided the heat insulating window having a light controlling performance according to any one of Claims 1 to 11 wherein an organic glass is used as a plate glass constituting the glass pane. In this case, the heat insulating window can be constituted in light weight and the heat insulating performance of the glass pane is further promoted.

According to Claim 15 of the present invention, there is provided the heat insulating window having a light controlling performance according to any one of Claims 1 to 14, further comprising a plurality of heating means integrally installed to the light-controllable glass for respectively and individually heating a plurality of regions on a glass face of the light-controllable glass, and switching means for selectively conducting electricity to only a desired one of the heating means.

According to the heat insulating window, electricity is conducted to the heating means of a desired region of the light-controllable glass by operating the switching means and only the region is switched to the light shielding state for which the amount of light transmittance is properly adjusted. For example, according to Claim 16 of the present invention, there is provided the heat insulating window having a light controlling performance wherein the heating means are installed such that the regions are constituted in a strip-like shape in a vertical direction and/or a lateral direction. In this case, the light shielding portion is increased or decreased in steps and the light-controllable glass is used as in a curtain or used as in a blind. However, the constitution can also be constructed such that in the case of arranging the heating means at constant intervals, when weak current is applied on the heating means, light is shielded only at a region provided with the heating means and when strong current is applied thereon, the light-controllable substance between regions provided with the heating means is also heated and a total face of the light-controllable glass is brought into the light shielding state.

According to Claim 17 of the present invention, there is provided the heat insulating window having a light controlling performance according to any one of Claims 1 to 14 wherein a composition of the light-controllable substance is adjusted such that a light transmittance is changed in steps from one side to other side of the light-controllable glass.

According to the heat insulating window, with rise in outer air temperature or room temperature, the light transmittance of the light-controllable substance is lowered in steps from one side to other side of the glass face of the light-controllable glass or an outer edge portion or a central portion of a pattern and the portion is brought into the light shielding state. For example, when light-controllable substances having different compositions are provided in vertical strips, the light shielding portion is increased or decreased in steps in accordance with a change in temperature and the light-controllable glass operates as in a curtain and when they are provided in lateral strips, the light shielding portion is increased or decreased in steps in accordance with a change in temperature and the light-controllable glass operates as in a blind.

Further, according to Claim 18 of the present invention, there is provided the heat insulating window having a light controlling performance wherein the composition of the light-controllable substance is adjusted such that a plurality of the light-controllable substances having different compositions are arranged such that a pattern is formed on the glass face of the light-controllable glass and the light transmittances of the plurality of light-controllable substances is changed in steps.

### BRIEF DESCRIPTION OF THE DRAWINGS

Fig. 1 is a perspective view of essential portions of a heat insulating window according to the present invention;
Fig. 2 is a perspective view of essential portions of a heat insulating window according to other constitution;
Fig. 3 is a cross-sectional view of the heat insulating window;
Fig. 4 is a cross-sectional view of light-controllable glass according to the first embodiment;
Fig. 5 is a cross-sectional view of other embodiment of the light-controllable glass;
Fig. 6 is a cross-sectional view of other embodiment of the light-controllable glass;
Fig. 7 is a cross-sectional view of other embodiment of the light-controllable glass;
Fig. 8 is a cross-sectional view of light-controllable glass according to a second embodiment;
Fig. 9 is a view showing a total constitution of the light-controllable glass;
Figs. 10(a), 10(b) and 10(c) are explanatory views of other layouts of heating means in the light-controllable glass;
Figs. 11(a) and 11(b) are explanatory views showing specific examples of using the light-controllable glass;
Fig. 12 is an explanatory view showing a specific example of using the light-controllable glass;
Figs. 13(a) and 13(b) are explanatory views showing specific examples of using the light-controllable glass;
Fig. 14 is a view showing a total constitution of light-controllable glass according to a third embodiment;
Fig. 15 is a cross-sectional view of the light-controllable glass;
Fig. 16 is a longitudinal sectional view of the light-controllable glass;
Fig. 17 is an explanatory view showing a method of fabricating the light-controllable glass;
Figs. 18(a), 18(b) and 18(c) are explanatory views showing operation of the, light-controllable glass;
Figs. 19(a) and 19(b) are explanatory views showing operation of the light-controllable glass;
Figs. 20(a) and 20(b) are explanatory views showing operation of the light-controllable glass;
Figs. 21(a), 21(b), 21(c) and 21(d) are explanatory views showing partitioning portions of the light-controllable glass; and
Fig. 22 is a cross-sectional view of light-controllable glass according to a fourth embodiment.

### DETAILED DESCRIPTION OF THE PREFERRED EMBODIMENTS

An explanation will be given of the embodiments according to the present invention in reference to the drawings as follows.

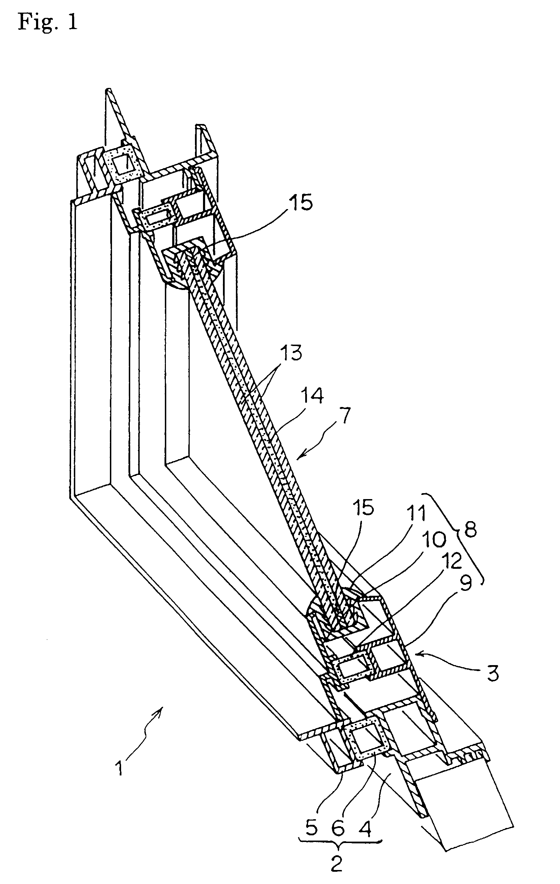

As shown by Fig. 1, a heat insulating window 1 is provided with a window frame 2 incorporated into a window opening portion of a building and a window body 3 incorporated into the opening portion of the window frame 2. Further, although the illustrated heat insulating window 1 is a window of a fixed sash type, the present invention is applicable also to various types of windows such as a double sliding window, a bay window, an opening out window, a side slid window, a drakip window, a double hinged window, a vertically sliding window, a corner window, a terrace door, a waist panel door, an opening in window at high place, a patio door and so on.

The window frame 2 is interposed with a hollow heat insulating member 6 between a room inner side division frame 4 and a room outer side division frame 5 over an entire length.

The window body 3 is integrated with light-controllable glass 7 as glass pane at a frame 8, the frame 8 is constituted to be divided into a room inner side division frame 9 and a room outer side division frame 10, a waterproof packing 11 mounted in water tight to the outer peripheral portion of the light-controllable glass 7 is provided between the inner peripheral portions of the both division frames 9 and 10 over an entire length and a hollow heat insulating member 12 is interposed between midway portions of the both division frames 9 and 10 over an entire length. However, various constitutions may be adopted for shapes and layouts of the room inner side division frames 4 and 9, the room outer side division frames 5 and 10, the heat insulating members 6 and 12 and the waterproof packing 11.

The room inner side division frames 4 and 9 and the room outer side division frames 5 and 10 are respectively constituted by hollow profile extruded articles made of a metallic material of an aluminum alloy or the like. However, as mentioned later, they can be constituted by a synthetic resin material or wood.

As a material for the heat insulating members 6 and 12, general synthetic resins of hard vinyl chloride resin, acrylic resin, polystyrene, polypropylene or the like can be used. Particularly, when foamed bodies of these resins are used, the heat insulating function is excellent. Further, in place of these resins, wood may be used.

Further, in respect of the waterproof packing 11, well-known materials of soft vinyl chloride resin, silicone resin, urethane resin and so on can be used. Particularly, when foamed bodies of these resins are used, the heat insulating function is excellent.

In respect of the light-controllable glass 7, a light-controllable substance 14 in which the light transmittance is changed by a change in temperature is filled between two sheets of transparent plates 13 which are parallelly arranged and a seal member 15 for preventing the light-controllable substance 14 from leaking is fillingly mounted between outer peripheral portions of the two sheets of the transparent plates 13.

In respect of the transparent plate 13, transparent organic glass comprising metacrylic resin, polycarbonate or the like having high heat insulating performance or transparent inorganic glass can be used. Further, in respect of the two sheets of the transparent plates 13, plates having same material may be used or plates comprising different materials may be used.

As a specific material of the light-controllable substance 14, there can be adopted an aqueous solution, an organic solution with alcohol or the like as a solvent or the like of polyvinyl alcohol partial acetate, polyvinyl methylether, methylcellulose, polyethylene oxide, polypropylene oxide, copolymer of polyethylene oxide and polypropylene oxide, polysaccharide derivative having hydroxypropyl-base (for example, hydroxypropyl cellulose), polyvinyl methyloxazolidinone, poly N-substitution acrylamide derivative (for example, poly N-isopropyl acrylamide, poly N-ethoxyethyl acrylamide or the like), poly N-substitution methacrylamide derivative (for example, poly N-isopropyl methacrylamide, poly N-3-ethoxypropyl methacrylamide or the like), or poly N, N-di-substitution acrylamide derivative (for example, poly N-methyl N-ethylacrylamide or the like). Further, when a light controllable substance having a cloud point is used, it is preferable to set the cloud point in a range of 10 through 80°C, preferably, in a range of 15 through 40°C such that room temperature becomes comfort temperature.

Further, as the light-controllable substance 14, a film-like or a plate-like solid material comprising a mixture of vinylidene fluoride-hexafluoro propylene copolymer and acrylic acid ester-base copolymer, a mixture of styrene-hydroxyethyl methacrylate copolymer and polypropylene oxide or the like can be adopted and in this case, at least one of the transparent plates 13 may be omitted. Further, an electrochromic light-controllable substance in which the light transmittance is changed by a change in voltage or current may be used.

Next, an explanation will be given of operation and effect of the heat insulating window 1.

According to the heat insulating window 1, the light-controllable glass 7 is used as glass pane and therefore, when outer air temperature or room temperature rises, the light transmittance of the light-controllable substance 14 is lowered, an amount of incidence of solar ray into a room is reduced and the rise of room temperature is restrained. Meanwhile, when outer air temperature or room temperature becomes low, the light transmittance of the light-controllable substance 14 is increased, the amount of incidence of solar ray into the room is increased and room temperature rises. In this way, the light transmittance of the light-controllable glass 7 is adjusted in accordance with outer air temperature or room temperature and the room temperature is automatically adjusted.

Further, the window frame 2 and the frame 8 are constituted to be divided into the room inner side division frames 4 and 9 and the room outer side division frames 5 and 10, the heat insulating members 6 and 12 are respectively interposed between the frames 4 and 5 and the frames 9 and 10 and accordingly, transfer of heat to or from the room at the window frame 2 and the frame 8 is reduced. Further, as the room outer side division frames 5 and 10, frames comprising extruded articles made of an aluminum alloy are used and accordingly, the fire protecting performance against spreading fire or the like is promoted. Further, when transparent organic glass is used for the transparent plate 13 of the light-controllable glass 7, transfer of heat to and from the room in the light-controllable glass 7 is significantly restrained.

In this way, by the temperature adjusting function by the light-controllable glass 7 and the heat insulating function of the heat insulating window 1, inside of room can be maintained in a comfort temperature and cooling and heating cost can considerably be saved.

However, in respect of the heat insulating window 1, the room inner side division frames 4 and 9 or the room outer side division frames 5 and 10 may be constituted by hollow profile extruded articles comprising a synthetic resin material having small heat conductivity, for example, weatherproofing hard vinyl chloride resin material having heat conductivity of 0.13 kcal/m·hr·°C. In this case, the heat insulating performance can sufficiently be ensured by the frames constituted by synthetic resin material and therefore, the heat insulating members 6 and 12 can be omitted. Particularly, when the room inner side division frames 4 and 9 are constituted by extruded articles made of a synthetic resin material and the room outer side division frames 5 and 10 are constituted by extruded articles made of an aluminum alloy, the fire protecting performance is promoted by the room outer side division frames 5 and 10 and occurrence of dew condensation on surfaces of the room inner side division frames 4 and 9 is prevented beforehand. Further, in respect of the synthetic resin material, so far as the material is provided with low heat conductivity and excellent in environment resistance performance or durability, in place of weatherproofing hard vinyl chloride resin material, for example, synthetic resin materials of ABS resin, high impact polystyrene resin and so on or slightly foamed bodies of these and so on can also be adopted.

Further, in respect of the window frame 2 and the frame 8, both of them need not to necessarily be constituted to divide but one of the window frame 2 and the frame 8 may be constituted to divide into inner and outer frames and the other may be constituted by a hollow profile extruded article made of a synthetic resin material having small heat conductivity or wood without being divided. Further, when the window frame 2 and the frame 8 are not constituted to divide, by constituting the window frame 2 and the frame 8 by hollow profile extruded articles made of a synthetic resin material having small heat conductivity, transfer of heat to and from a room is reduced.

At this occasion, a simple explanation will be given of a specific example of a heat insulating window in which respectives of the window frame 2 and the frame 8 are not constituted to divide. Further, the same notations are attached to members the same as those in the above-described heat insulating window 1 and an explanation thereof will be omitted.

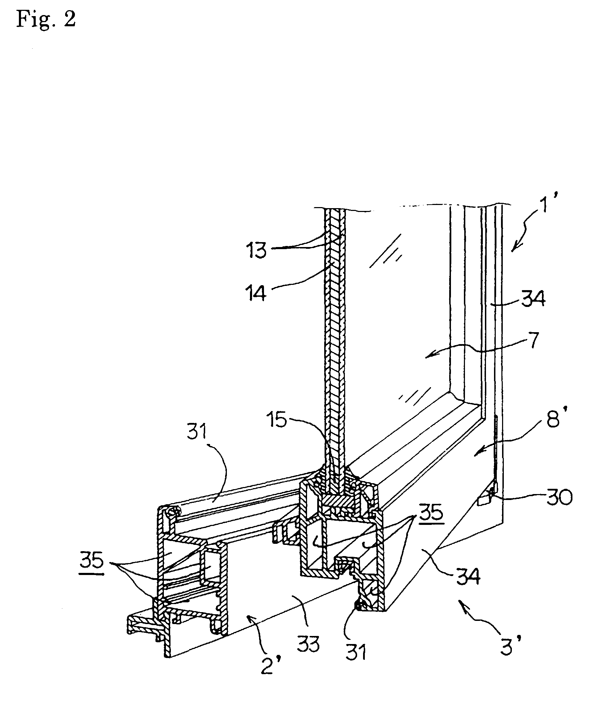

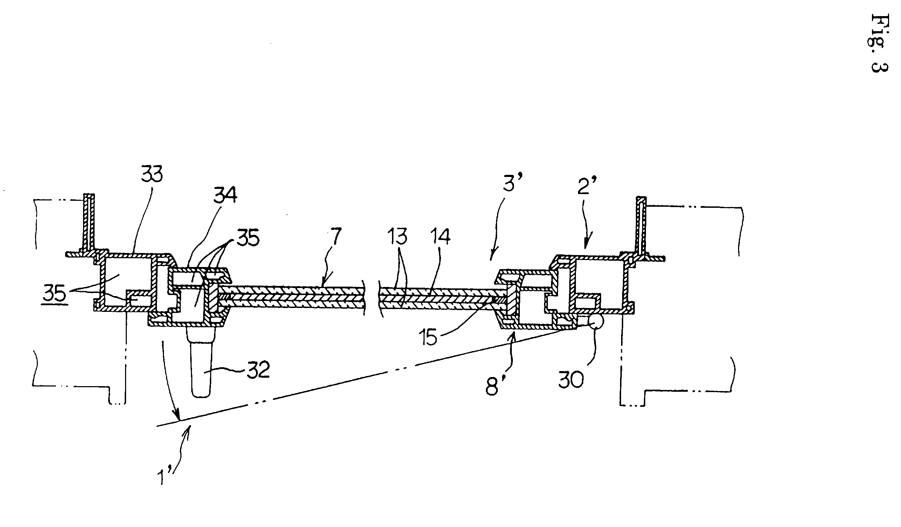

A window shown by Fig. 2 and Fig. 3 is a heat insulating window 1' of a drakip type which is provided with a window frame 2' made of a synthetic resin material incorporated into a window opening portion of a building and a window body 3' for opening and closing the opening portion of the window frame 2'.

In respect of the window body 3', the outer peripheral portion of the light-controllable glass 7 as glass pane is held by a frame 8' made of a synthetic resin material and supported by the window frame 2' pivotably to the inner side of a room via a pair of upper and lower hinge members 30. Further, notation 31 designates a waterproof packing for bringing the window frame 2' and the window body 3' in close contact with each other in water tight in closing the window body 3' and notation 32 designates a handle for opening and closing the window body 3'. Further, although not illustrated, the heat insulating window 1' is integrated with a lock mechanism or the like for holding the window body 3' at a closed position.

Frame constituting members 33 and 34 for constituting respective sides of the window frame 2' and the frame 8' are produced respectively by forming weatherproofing hard vinyl chloride resin material having heat conductivity of 0.13 kcal/m·hr·°C by hollow deformed extrusion and hollow portions 35 are formed at insides of the frame constituting members 33 and 34. However, as material of the window frame 2' and the frame 8', so far as the material is provided with low heat conductivity and is excellent in environment resistance performance and durability, in place of weatherproofing hard vinyl chloride resin material, for example, synthetic resin materials of ABS resin, high impact polystyrene resin and so on and slightly foamed bodies of these or the like can also be adopted.

According to the heat insulating window 1', as the material of the window frame 2' and the frame 8', a material having heat conductivity smaller than 1/1000 of that of an aluminum alloy (heat conductivity, 175 kcal/m·hr·°C) and excellent in the heat insulating performance is used and the frames are produced by hollow deformed extrusion by which the hollow portions 35 formed in the frame constituting members 33 and 34 can be utilized as heat insulating spaces and accordingly, transfer of heat to and from a room in the window frame 2' and the frame 8' can considerably be restrained and occurrence of dew condensation can also be prevented.

Next, an explanation will be given of other embodiments in which the constitution of the light-controllable glass 7 is partially changed. Further, the same notations are attached to members the same as those in the above-described embodiment and a detailed explanation thereof will be omitted.

### (First Embodiment)

The first embodiment relates to a technology for charging the light-controllable substance 14 efficiently between the two sheets of transparent plates 13 by using transparent films 20.

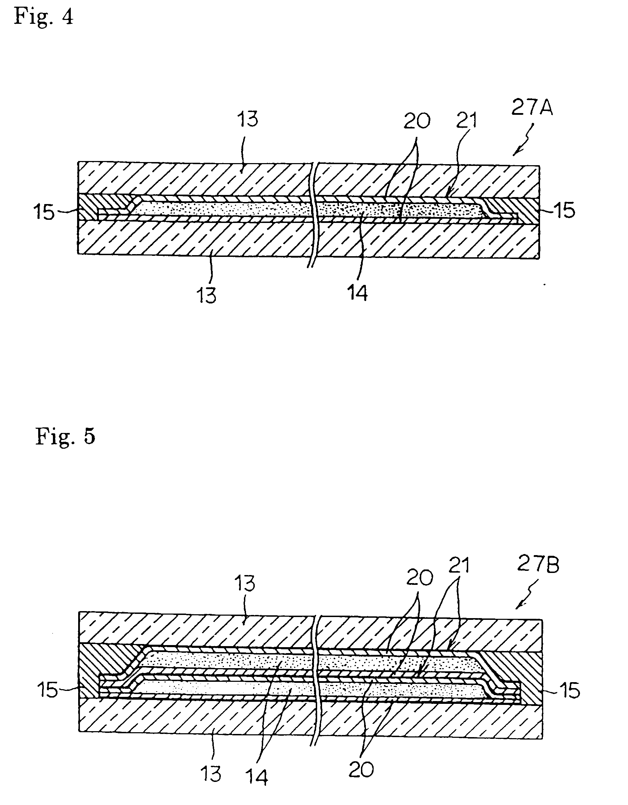

A light-controllable film article 21 previously charged with the light-controllable substance 14 between two sheets of the transparent films 20 may be fabricated and the light-controllable film article 21 may be mounted between the two sheets of transparent plates 13 as shown by light-controllable glass 27A illustrated by Fig. 4 or a plurality of the light-controllable film articles 21 may be fixedly adhered to each other in a laminated shape by an adhesive agent and the articles may be mounted between the two sheets of the transparent plates 13 as shown by light-controllable glass 27B illustrated by Fig. 5.

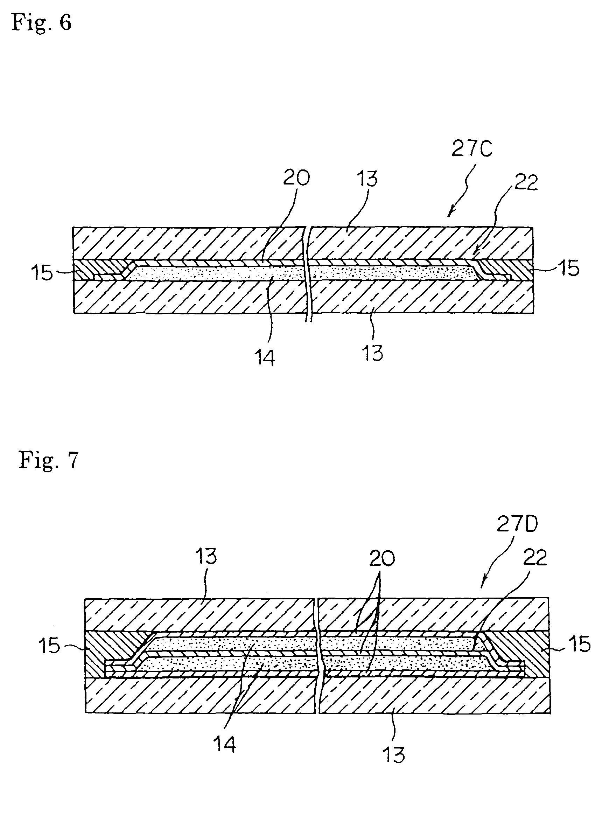

Further, a light-controllable film article 22 previously charged with the light-controllable substance 14 between the transparent film 20 and the transparent film 13 may be formed and the transparent plate 13 may be pasted on the outer face of the transparent film 20 of the light-controllable film article 22 as shown by light-controllable glass 27C illustrated by Fig. 6 or other ones of the light-controllable substance 14 may be laminated on the light-controllable film articles 22 successively via the transparent films 20 and the transparent plate 13 may be pasted on the outer face on a topmost one of the transparent film 20 as shown by light-controllable glass 27D illustrated by Fig. 7.

According to the light-controllable glass 27A, 27B, 27C and 27D, the light-controllable substance 14 is charged between the transparent plate 13 and the transparent film 20 or between two sheets of the transparent films 20 while defoaming the substance by, for example, pinching it between a pair of rollers by which foamless beautiful light-controllable glass 27A, 27B, 27C and 27D can efficiently be produced.

Further, according to the light-controllable glass 27B and 27D, by charging the light-controllable substances 14 having different light controlling temperatures or by charging the light-controllable substances 14 having different light controlling conditions of a change in temperature, a change in light amount or the like, an amount of incidence of solar ray into a room can be adjusted in steps or in accordance with light controlling conditions. Further, in place of one layer of the light-controllable substance 14, for example, by forming a layer comprising α gel (impact absorbing gel) or the like, a plurality of functions such as soundproof function and the like can also be provided to the light-controllable glass 27B and 27D in addition to the light controlling function.

As the transparent film 20, although a colorless transparent film is preferable, a colored film, a heat ray reflecting film or a translucent film or the like can be used. Further, a film having an ultraviolet ray shielding function or a film having scatter preventing function may be used. Further, electromagnetic wave shielding effect may be provided by using the transparent film 20 having electric conductivity or the transparent film 20 formed with a conductive layer on its outer face and grounding the transparent film 20 or the like. Further, when a plurality of the transparent films 20 are used, films comprising different materials may be used.

When an adhesive agent is used for fixedly bringing the transparent film 20 and the transparent plate 13 and the transparent films 20 in close contact with each other, an adhesive agent having an ultraviolet ray shielding function or a scatter preventing function or an adhesive agent having both of the ultraviolet ray shielding function and the scatter preventing function may be used as in, for example, "SUNSTOP" resin made by Daito Chemitronics Co., Ltd.

### (Second Embodiment)

The second embodiment is constituted such that a desired light shielding state is provided also in the night time or the like by using a light-controllable substance in which the light transmittance is changed by a change in temperature as a light-controllable substance and by forcibly heating the light-controllable substance by heating means 30.

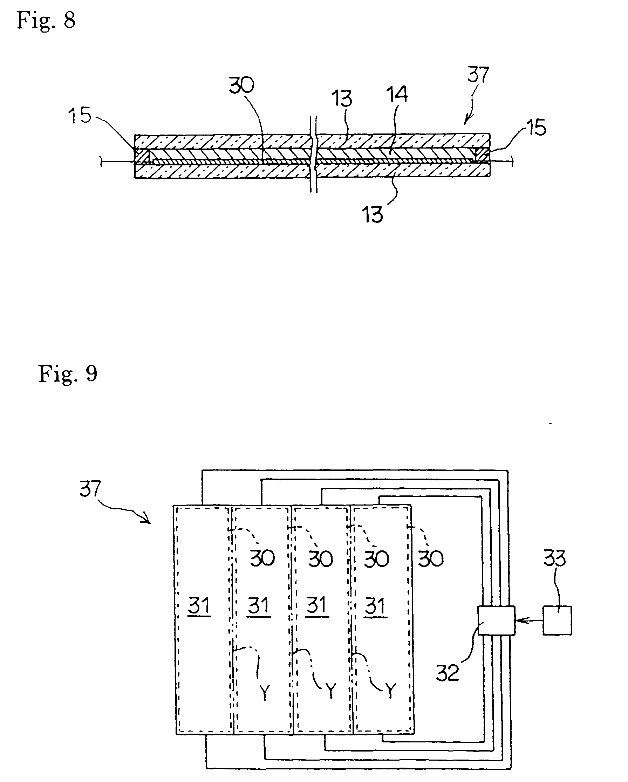

As shown by Fig. 8, according to light-controllable glass 37, basically, the light-controllable substance 14 manifesting a cloud point by a change in temperature and the heating means 30 for heating the light-controllable substance 14 are sealed between two sheets of the transparent plates 13 which are parallelly arranged and the seal member 15 is mounted between the outer peripheral portions of the transparent plates 13 in order to prevent leakage of the light-controllable substance 14.

Although in respect of the light-controllable glass 37, the composition of the light-controllable substance 14 is adjusted in accordance with purpose of use or the like and the cloud point is set to an optimum value, when the glass is used as, for example, glass pane of a building, the light-controllable substance 14 having the cloud point in a range of 10 through 50°C, preferably, in a range of 15 through 40°C is used such that the light-controllable glass 37 is switched to a light transmitting state and a light shielding state depending on outer air temperature. However, the cloud point of the light-controllable substance 14 may be set to be higher than outer air temperature (for example, 40 through 80°C) and the light-controllable glass 37 may be switched to the light shielding state only when the heating means 30 is operated.

As shown by imaginary lines in Fig. 9, the glass face of the light-controllable glass 37 is partitioned into four strip-like regions 31 by three partition lines Y extending in the vertical direction and the heating means 30 are respectively and individually provided between the both transparent plates 13 in correspondence with the four regions 31. Further, when current is applied on the heating means 30, the light-controllable substance 14 within the region 31 installed with the heating means 30 is clouded by being forcibly heated and the region 31 is brought into a light shielding state. Further, the glass face of the light-controllable glass 37 may be partitioned by the partition lines Y of a number other than three and the heating means 30 may be installed to the respective partitioned regions.

The heating means 30 may be installed to be brought into close contact with an inner face of one of the transparent plates 13 as shown by Fig. 8 or may be arranged on the side of an outer face of the transparent plate 13. Further, as the heating means 30, a transparent heating body comprising indium tin oxide (ITO) or tin oxide or the like or a heat generating line comprising carbon paste, metal paste, a metal line or the like can be used and end portions thereof are connected to a control box 32.

The control box 32 is connected with inputting means 33 for setting the regions 31 for shielding light in accordance with request of a user, switching means (not illustrated) of the control box 32 are switched in accordance with operation of the inputting means 33 and electricity is fed to desired ones of the heating means 30. Further, light shielding portions can automatically be changed by installing sensors for measuring outer air temperature and an amount of incidence of solar ray at the control box 32 and the light shielding portions may be changed at a constant time period by installing storing means. Further, the heating means 30 fed with electricity by the switching means may directly be selected by omitting the control box 32. Further, when the light-controllable glass 37 is used as glass pane of a building, a plurality of sheets of the light-controllable glass 37 may centrally be controlled by the control box 32.

Next, an explanation will be given of other embodiments of the light-controllable glass 37 in which layout of the regions 31 where light is shielded is changed.

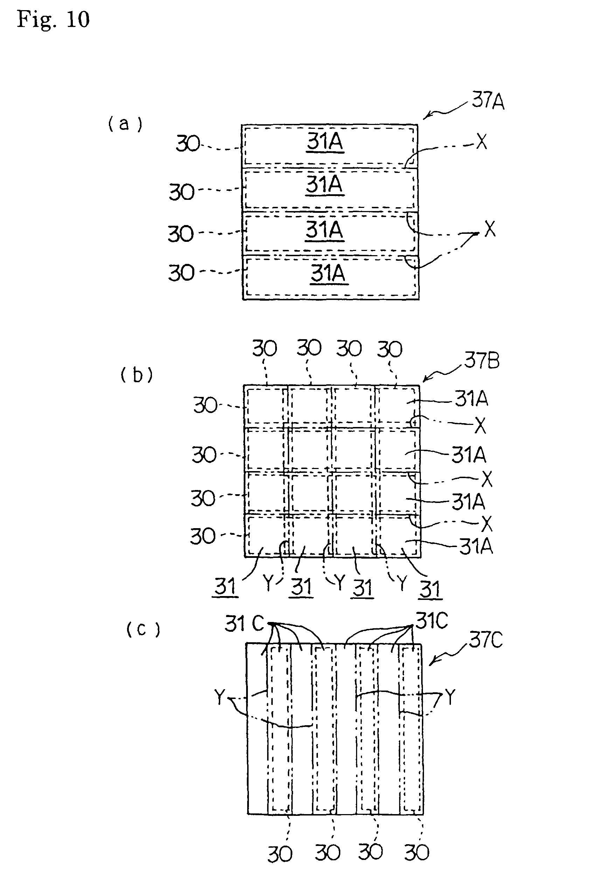

The glass face may be partitioned into four strip-like regions 31A by three partitions lines X in the lateral direction and the heating means 30 may be installed respectively and individually in correspondence with the four regions 31A as in light-controllable glass 37A shown by Fig. 10(a).

The glass face may be partitioned into respective fours of the strip-like regions 31 and 31A by three partition lines X in the vertical direction and by the three partition lines Y in the lateral direction and the heating means 30 may be installed respectively and individually in correspondence with the eight vertical and lateral regions 31 and 31A as in light-controllable glass 37B shown by Fig. 10(b). Further, in this case, the heating means 30 arranged in the lateral direction and the heating means 30 arranged in the vertical direction may be formed on the same transparent plate 13 in a laminated shape or may be installed respectively on two sheets of the transparent plates 13.

The glass face may be partitioned into eight strip-like regions 31C by seven partition lines Y in the vertical direction and the heating means 30 may be installed respectively and individually at every other ones of the regions 31C among the eight regions 31C as in light-controllable glass 37C shown by Fig. 10(c). Further, also in the light-controllable glass 37A or 37B, similar to the light-controllable glass 37C, the heating means 30 can be installed at every other ones of the regions 31 and 31A.

Further, although not illustrated, the glass face can be partitioned into a plurality of regions by partition lines comprising inclined lines or curved lines. Further, although the more the number of partitions, the more finely the light shielding portions can be adjusted, wirings to the heating means 30 and control of the heating means 30 become complicated and therefore, the number is pertinently selected in accordance with purpose of use, location of use or the like.

Next, a simple explanation will be given of specific methods of using the light-controllable glass 37, 37A, 37B and 37C. Further, portions indicated by hatching constitute the shielding portions in the drawings.

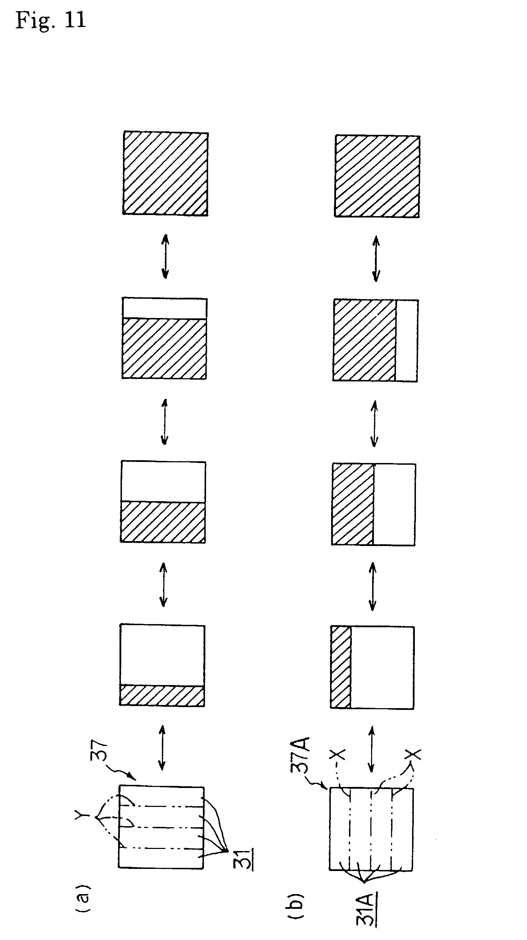

In respect of the light-controllable glass 37, as shown by Fig. 11(a), by increasing or decreasing light shielding portions in steps, the light-controllable glass 37 is used as in a curtain or is used by shielding light at desired ones of the heating region 31 of the light-controllable glass 37 or by arranging alternately light shielding portions and transparent portions.

In respect of the light-controllable glass 37A, as shown by Fig. 11(b), by increasing and decreasing the shielding portions in steps, the light-controllable glass 37A is used as in a blind or is used by shielding light at desired ones of the region 31A of the light-controllable glass 37A or by alternately arranging light shielding portions and transparent portions.

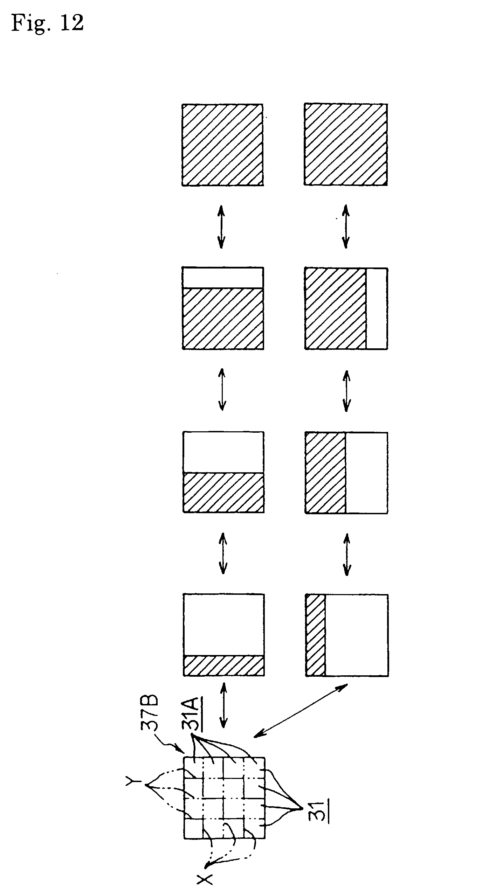

In respect of the light-controllable glass 37B, as shown by Fig. 12, similar to the above-described light-controllable glass 37 and 37A, the light-controllable glass 37B is used as in a curtain or a blind or is used by shielding light at desired ones of the regions 31 and 31A of the light-controllable glass 37B or by alternately arranging light shielding portions and transparent portions.

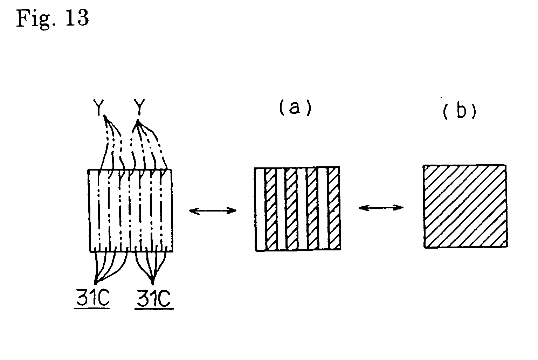

In respect of the light-controllable glass 37C, as shown by Fig. 13(a), by applying weak current on the heating means 30, light is shielded only at the region 31C installed with the heating means 30, the glass is used by alternately arranging light shielding portions and transparent portions or by applying strong current, as shown by Fig. 6(b), the glass is used by shielding light at a total of the light-controllable glass 37C by elevating temperature of the light-controllable substance 14 also at ones of the regions 31C where the heating means 30 are not provided.

The light-controllable glass 37, 37A, 37B and 37C can be used for outer plate panel, glass pane, door glass or the like of a building, may be used as glass for sunroof or rear window of an automobile or can be utilized as glass in a green house or the like. Further, similar to the light-controllable glass according to the first embodiment, the light-controllable glass 37, 37A, 37B and 37C can be produced by using transparent films.

### (Third Embodiment)

The third embodiment is constituted such that light-controllable glass is divided into a plurality of blocks and light-controllable substances having different light control temperatures are sealed in the respective blocks by which a light shielding region is changed in steps in accordance with outer air temperature or the like.

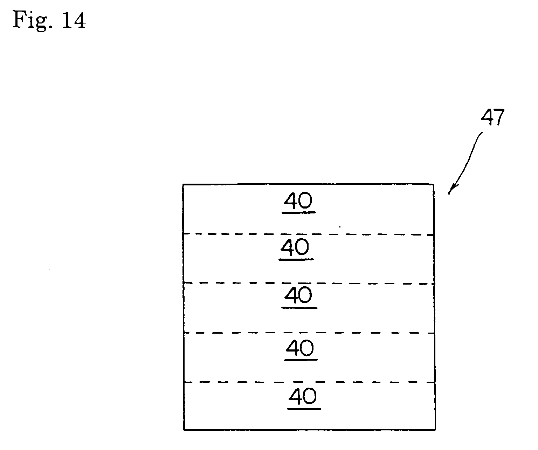

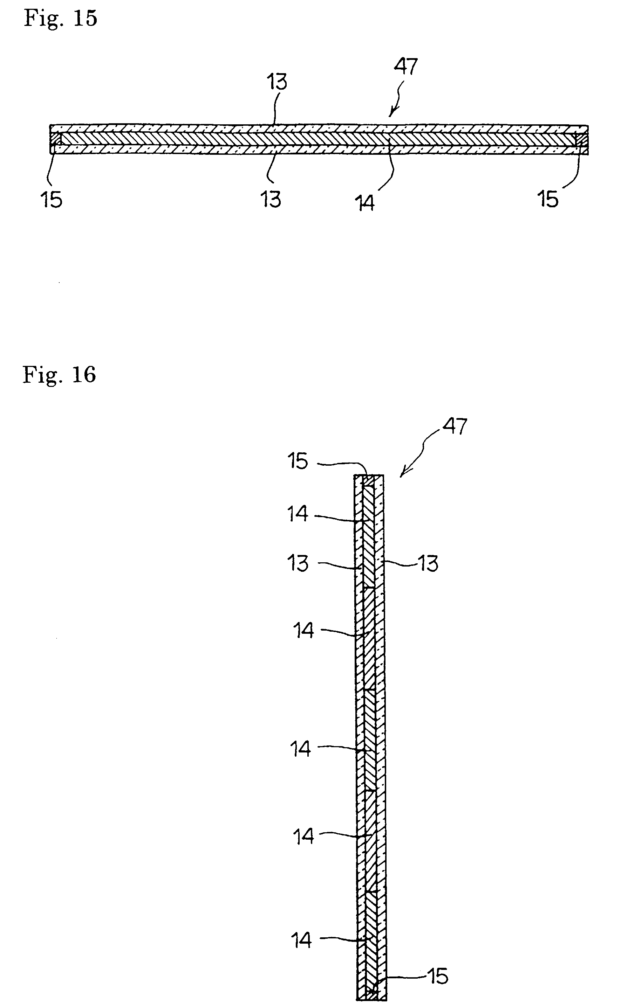

As shown by Figs. 14 through 16, light-controllable glass 47 is basically constituted such that the light-controllable substance 14 manifesting the cloud point by a change in temperature is sealed between two sheets of the transparent plates 13 which are parallelly arranged and the seal member 15 is mounted between outer peripheral portions of the transparent plates 13 to prevent leakage of the light-controllable substance 14.

The composition of the light-controllable substance 14 sealed between the transparent plates 13 is adjusted such that the cloud point is elevated in steps from an upper edge to a lower edge of the light-controllable glass 47 and the glass face of the light-controllable glass 47 is partitioned in five strip-like regions 40 extending in the lateral direction. For example, the cloud points of the light-controllable substances 14 are set to 20°C, 24°C, 28°C, 32°C and 36°C in this order from the region 40 on the upper edge side, when temperature of the light-controllable substances 14 become equal to or higher than the cloud points by rise of outer air temperature or room temperature, the light-controllable substances 14 of the regions 40 temperature of which become equal to or higher than the cloud points are successively clouded. However, when the cloud points of the light-controllable substances sealed in the five regions 40 are set such that they are changed in steps from one side to other side, they can arbitrarily be set in accordance with environment of use or the like.

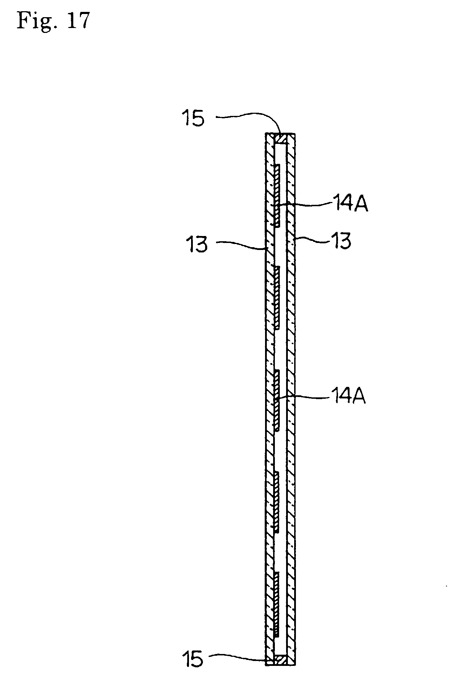

When a gel-like substance which is swollen but not dissolved by a solvent is used as the light-controllable substance 14, as shown by Fig. 17, in a state where a light-controllable substance 14A which is substantially in a dried state is adhered to one of the transparent plates 13, the both transparent plates 13 are made to overlap at a constant interval and a solvent is injected between the both transparent plates 13 by which the light-controllable substance 14A is made to swell and the light-controllable substance 14 is charged between the both transparent plates 13 substantially with no gap. Further, although the light-controllable substances 14 at contiguous ones of the regions 40 are brought into contact with each other, they are not mixed together since the light-controllable substance 14 is not dissolved by the solvent.

As a method of adjusting the cloud point of the light-controllable substance 14, there can be adopted a method in which an average molecular weight thereof may be made to differ or a kind and/or an amount of an additive is made to differ. When the cloud point is adjusted by an added substance, for example, the cloud point is lowered by increasing an amount of added salt and the cloud point is elevated by increasing an amount of added alcohol. Further, a method of lowering the cloud point by ultrafiltration may be adopted. Further, the cloud point may be adjusted to be low by increasing the average molecular weight or making sharp a molecular weight distribution. Further, the cloud point can be adjusted by also using the method mentioned above.

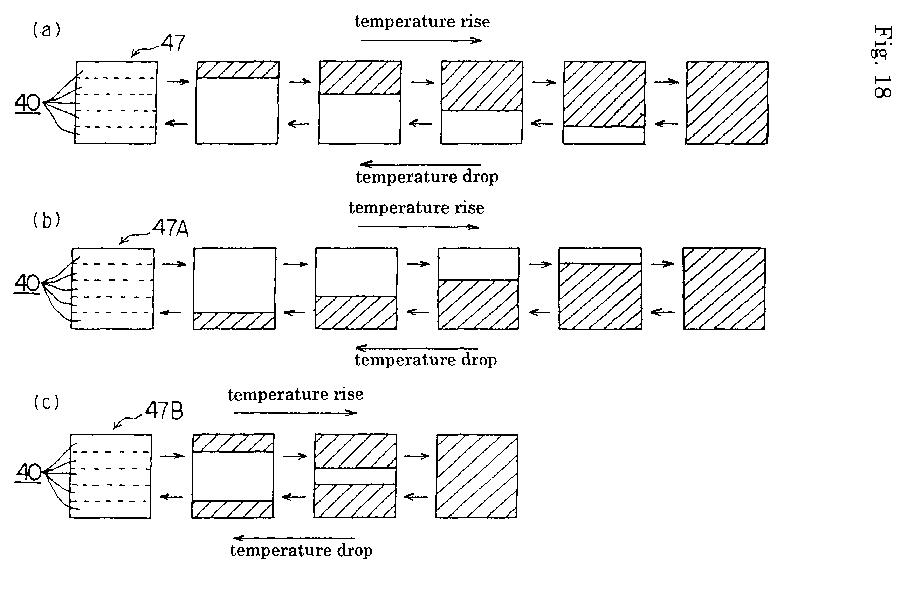

According to the light-controllable glass 47, as shown by Fig. 18(a), with rise in outer air temperature or room temperature, a light shielding state is successively produced from upper side ones of the regions 40, with drop in outer air temperature or room temperature, a light transmitting state is successively produced from lower side ones of the regions 40 by which the light-controllable glass 47 operates as in a blind and room temperature or an amount of light transmittance is adjusted in accordance with solar ray or the like. Incidentally, portions shown by hatching designate light shielding portions in the drawings.

However, as in light-controllable glass 47A shown by Fig. 18(b), the constitution may be constructed such that the composition of the light-controllable substance 14 is set such that the cloud point is elevated in steps from the lower edge to the upper edge of the light-controllable glass 47A, with rise in outer air temperature or room temperature, the light shielding state is successively produced from lower side ones of the regions 40 and with drop in outer air temperature or room temperature, the light transmitting state is successively produced from upper side ones of the regions 40. That is, in a general house, eaves are arranged on the upper side of a window and therefore, an upper half portion of glass pane is in the shade by the eaves and accordingly, by producing the light shielding state from the lower side of the glass pane, room temperature can be adjusted by shielding solar ray without hindering the field of vision to a possible degree.

Further, as in light-controllable glass 47B shown by Fig. 18(c), the composition of the light-controllable substance 14 may be set such that the cloud point is elevated in steps from both upper and lower edges to a central portion of the light-controllable glass 47B, the light shielding state is successively produced from both upper and lower side ones of the regions 40 with rise in outer air temperature or room temperature and the light transmitting state is successively produced from the central one of the region 40 with drop in outer air temperature or room temperature. That is, in respect of glass pane of a building or the like, a point which one's eyes are directed is frequently disposed at a central portion of the glass pane and therefore, by providing the field of vision at the central portion as much as possible, a sense of oppression or the like caused by shielding light can be prevented as less as possible.

Further, although according to the light-controllable glass 47, 47A and 47B, the same width is set to the five regions 40, the width may be set such that the width of the region 40 is enlarged at a portion where solar ray is liable to be incident on and light is efficiently shielded and the width of the region 40 is narrowed at a portion where the field of vision is intended to provide by which the light shielding portion is finely adjusted and the sense of oppression or the like is prevented to a possible degree. Further, a plurality of kinds other than five kinds of the light-controllable substances 14 may be sealed between the transparent plates 13 and the glass face may be partitioned in regions of other than five.

Next, an explanation will be given of other embodiments of the light-controllable glass 47 in which the layout of the regions 40 is changed. Incidentally, portions shown by hatching designate light shielding portions in the drawings.

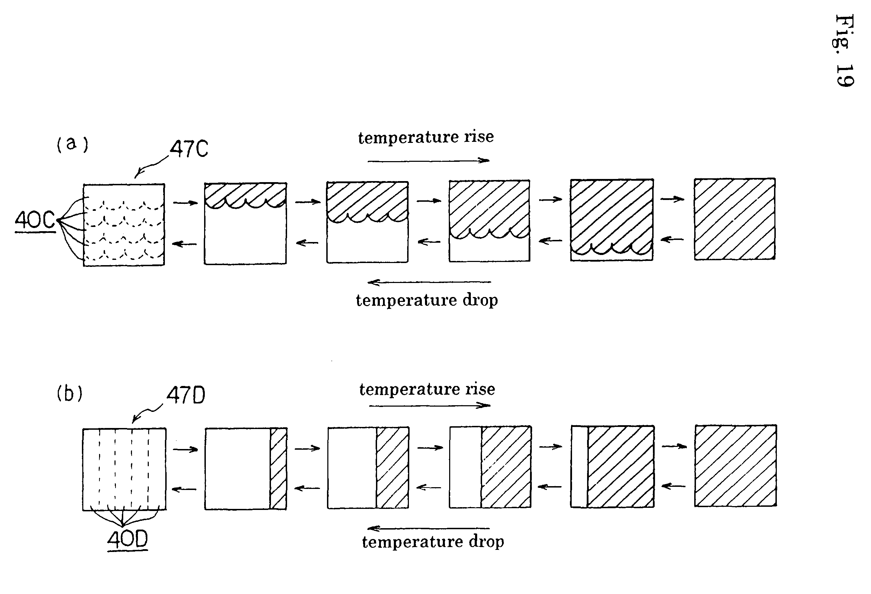

The glass face may be partitioned into five regions 40C in a strip-like shape extending in the lateral direction while charging the light-controllable substance 14 between the transparent plates 13 such that a boundary line between contiguous ones of the light-controllable substance 14 constitutes a curved line in a wavy shape as in light-controllable glass 47C shown by Fig. 19(a). Further, the boundary between the contiguous ones of the light- controllable substance 14 can be set to be a curved line of other than a wavy shape. According to the light-controllable glass 47C, similar to the above-described light-controllable glass 47, the light shielding portion is moved in the up and down direction as in a blind.

The glass face may be partitioned into the five regions 40D in a strip-like shape extending in the vertical direction while filling the light-controllable substance between the transparent plates 13 such that a boundary line between contiguous ones of the light-controllable substance 14 is directed in the vertical direction as in light-controllable glass 47D shown by Fig. 19(b) and the composition of the light-controllable substance 14 charged to the respective regions 40D may be adjusted such that the cloud point is elevated in steps from a right side edge to a left side edge or from the left side edge to the right side edge. According to the light-controllable glass 47D, with rise in outer air temperature or room temperature, the light shielding portion is increased by which the light-controllable glass 47D can be used as in a curtain.

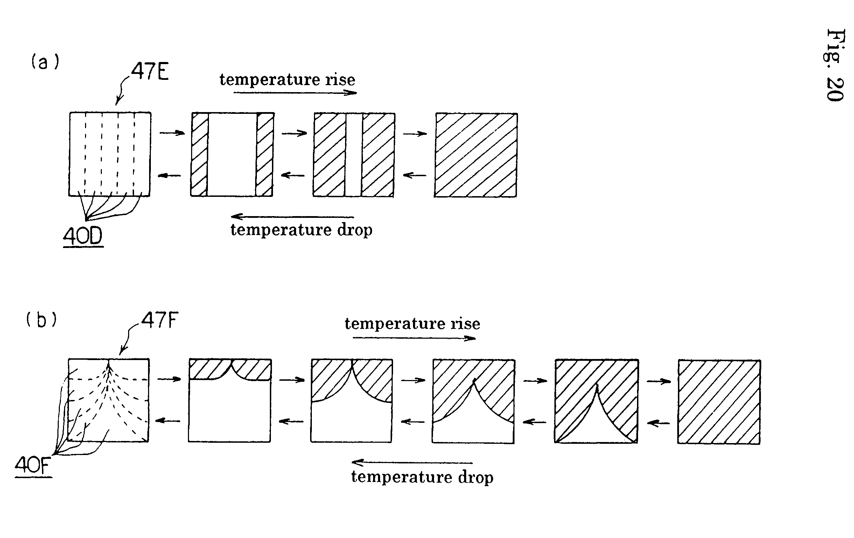

The composition of the light-controllable substance 14 charged to the respective regions 40D may be adjusted such that the cloud point is elevated in steps from both left and right sides to a central portion side as in light-controllable glass 47E shown by Fig. 20(a). Further, in the case of a slide window, in left and right windows, a right side glass pane may be partitioned as in a right half of the light-controllable glass 47D and a left side glass pane may be partitioned as in a left half portion thereof by which light shielding as shown by Fig. 20(a) may be carried out by a combination of left and right ones of the glass pane.

The glass face may be partitioned into a plurality of regions 40F and the light-controllable substance 14 may be charged such that the glass face is partitioned in a shape of a center opening curtain as in light-controllable glass 47F shown by Fig. 20(b) and the light shielding portion may be set to increase or decrease as in a substantially real curtain.

Further, although in the illustrated examples, the glass face is respectively divided into the five regions 40, 40C, 40D, 40E and 40F, the glass face can be divided into regions of other than five. Further, although an explanation has been given of the light-controllable glass 47C and 47F as examples of forming patterns on the glass face by the light-controllable substance 14, the light-controllable substances 14 having different compositions may be arranged in a pattern other than those, for example, in a pattern of a shape of polka dots or concentric circles.

When a liquid state one is used as the light-controllable substance 14, in order to prevent the light-controllable substance 14 from mixing with each other at contiguous ones of the regions 40, 40C, 40D, 40E or 40F, it is preferable to provide partitioning portions having the following constitutions at boundary portions. Incidentally, the same constitution can be constructed even with the light-controllable glass 47 having the light-controllable substance 14 in a gel-like shape.

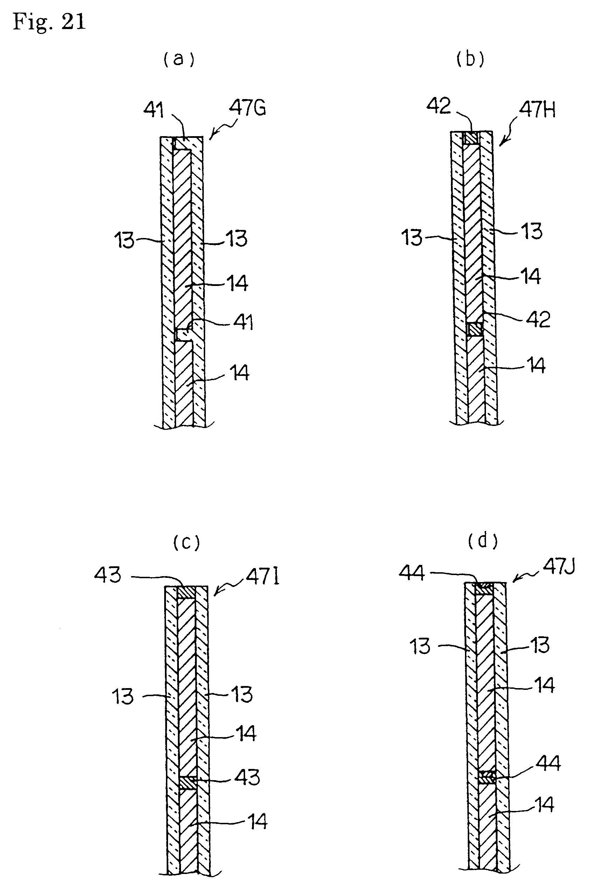

As in light-controllable glass 47G shown by Fig. 21(a), a partitioning portion may be formed by a projected streak 41 such that the projected streak 41 is integrally formed at one of the transparent plates 13 over its entire length and an end face of the projected streak 41 is fixed to other of the transparent plates 13 via an adhesive agent. Further, as in light-controllable glass 47H shown by Fig. 21(b), a partitioning portion may be formed such that a partitioning member 42 comprising a metal spacer, rubber, plastics or the like is fixed between the transparent plates 13 by an adhesive agent of acrylic-base, vinyl chloride-base, cerasorza, silicone, denatured silicone, epoxy resin or the like.

Further, as in light-controllable glass 47I shown by Fig. 21(c), a partitioning portion can be constituted by providing a curing type material 43 of the cerasorza, silicone, denatured silicone, epoxy resin or the like between the transparent plates 13. Further, as in light-controllable glass 47J shown by Fig. 21(d), a heat generating line 44 comprising nichrome or the like may be utilized as a partitioning member and in this case, by heating the light-controllable substance 14 by the heat generating line 44, a total or a necessary portion of glass face can be made to forcibly shield light.

The light-controllable glass 47, 47A, 47B, 47C, 47D, 47E, 47F, 47G, 47H, 47I and 47J can be used as an outer plate panel, glass pane, door glass or the like of a building or may be used as sunroof or the like of an automobile or can be utilized as glass in a greenhouse or the like. The light-controllable glass 47, 47A, 47B, 47C, 47D, 47E, 47F, 47G, 47H, 47I and 47J can be produced by using a transparent film similar to the light-controllable glass according to the first embodiment.

### (Fourth Embodiment)

The fourth embodiment relates to a sealed insulating glass pane using light-controllable glass.

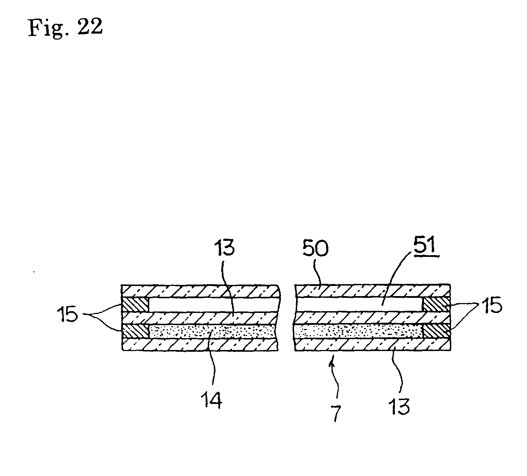

As shown by Fig. 22, a sealed insulating glass pane may be constituted by arranging the light-controllable glass 7 and general transparent glass 50 parallelly at a constant interval. In this case, a gap 51 between the light-controllable glass 7 and the transparent glass 50 operates as a heat-insulating space and a sound isolating space and accordingly, room environment is further promoted. Incidentally, in place of the light-controllable glass 7, the light-controllable glass described in the first through the third embodiments mentioned above can also be used. Further, the light-controllable substance can be heated or cooled by installing means for supplying to circulate warm air or cool air to the gap 51.

Further, when the light-controllable glass 7 is arranged on the inner side of a room, temperature of the light-controllable glass 7 becomes near to room temperature and accordingly, the light transmittance of the light-controllable glass 7 can be adjusted at an optimum temperature in accordance with the room temperature. However, heat shielding effect and energy conserving effect may be promoted by cutting transfer of heat to inner side of the room by the gap 51 by arranging the light-controllable glass 7 on the outer side of the room.

Further, an amount of incidence of solar ray into a room may be adjusted in steps by filling the light-controllable substances 14 having different light-controllable temperature in the gap 51 or sound isolating function can be intensified or other function may be provided by filling α gel (impact absorbing gel) or the like. Further, light-controllable substances having different light controlling conditions such as a change in temperature, a change in light amount or the like can be used as the light-controllable substances 14 in a shape of a plurality of layers.

With respect to the heat insulating window having light controlling performance according to Claim 1, the light-controllable glass is used as glass pane and therefore, room temperature can be adjusted by shielding solar ray in accordance with outer air temperature or the like. Further, the window frame and the frame are constituted by extruded articles made of synthetic resin material and therefore, transfer of heat to and from a room at the window frame and the frame can effectively be shielded. That is, by temperature adjusting function by the light-controllable glass and heat insulating function in the window frame and the frame, room temperature can be maintained at a comfort temperature while reducing cooling and heating cost. Further, the window frame and the frame made of synthetic resin material are used and therefore, occurrence of dew condensation on faces of the window frame and the frame on the inner side of the room can be prevented. Furthermore, by constituting the window frame and the frame by synthetic resin material, the heat conductivities become small and accordingly, "heat crack" of the light-controllable glass caused by lowering outer air temperature can effectively be prevented. Further, members constituting the respective sides of the window frame and the frame can be produced continuously by extrusion and accordingly, the cost of fabricating a total of the heat insulating window can be reduced.

With respect of the heat insulating window having light controlling performance according to Claim 2, the light-controllable glass is used as glass pane, one of the window frame and the frame is constituted by wood, other is constituted by the extruded article made of synthetic resin material or wood and therefore, similar to Claim 1, effects in which room temperature can be maintained at a comfort temperature while reducing cooling and heating cost, occurrence of dew condensation at the window frame and the frame can be prevented, the cost of fabricating a total of the heat insulating window is reduced and so on are achieved. Further, by constituting the window frame and the frame by a synthetic resin material or wood, the heat conductivities become small and therefore, "heat crack" of the light-controllable glass caused by lowering outer air temperature can effectively be prevented. Further, the dimension of wood can be adjusted easily by a saw or the like and wood can be coupled easily by nails or screwed nails and accordingly, integration performance in respect of a building can be promoted.

With respect to the heat insulating window having light controlling performance according to Claim 3, the light-controllable glass is used as glass pane, each of glass pane and the frame is constituted by the heat insulating frame having the room inner side division frame and the room outer side division frame both comprising extruded articles and the heat insulating member interposed between the two division frames and accordingly, similar to Claim 1, effects in which room temperature can be maintained at a comfort temperature while reducing cooling and heating cost, occurrence of dew condensation in the window frame and the frame can be prevented, "heat crack" of the light-controllable glass caused by lowering outer air temperature can effectively be prevented, the cost of fabricating a total of the heat insulating window is reduced and so on are achieved. Further, by constituting the window frame and the frame by the heat insulating frames, the heat conductivities become small and accordingly, "heat crack" of the light-controllable glass caused by lowering outer air temperature can effectively be prevented.

With respect of the heat insulating window having light controlling performance according to Claim 4, the light-controllable glass is used as glass pane, one of the window frame and the frame is constituted by the heat insulating frame having the room inner side division frame and the room outer side division frame both comprising extruded articles and the heat insulating member interposed between the two division frames and other is constituted by an extruded article made of synthetic resin material or wood and accordingly, similar to Claim 1, effects in which room temperature can be maintained at a comfort temperature while reducing cooling and heating cost, occurrence of dew condensation at the window frame and the frame can be prevented, the cost of fabricating a total of the heat insulating window is reduced and so on are achieved. Further, by constituting one of the window frame and the frame by the heat insulating frame and constituting other by synthetic resin material or wood, the heat conductivities of the window frame and the frame become small and accordingly, "heat crack" of the light-controllable glass caused by lowering outer air temperature can effectively be prevented.

According to the constitution described in Claim 5, while simplifying the constitution of the heat insulating frame by omitting the heat insulating member, transfer of heat to and from a room at the heat insulating frame portion is effectively prevented by the frame on an inner side of a room or an outer side of a room which is made of synthetic resin material and while reducing the cost of fabricating the heat insulating frame, cooling and heating cost can be reduced.

According to the constitution described in Claim 6, the heat insulating performance of the window frame or the frame is further promoted by a hollow portion of the hollow profile extruded article, cooling and heating cost can further be reduced, the window frame or the frame can be constituted in light weight without lowering strength thereof and cost of fabricating the window frame or the frame can be reduced.

According to the constitution described in Claim 7, an effect similar to that of the heat insulating window according to Claim 6 is achieved and the room outer side division frame made of an aluminum alloy is arranged on an outer side of a room and accordingly, fireproof performance against flying sparks or the like from neighboring houses can be promoted.

According to the constitution described in Claim 8, an air layer formed between the light-controllable glass and the general glass operates as a heat insulating space and heat insulating performance and sound isolating performance of the glass pane are promoted and further, according to the constitution described in Claim 9, the light transmittance of the light-controllable glass can be adjusted in an optimum state in accordance with room temperature and both of them can reduce cooling and heating cost and can promote the comfortability.

According to the constitution described in Claims 10 or 11, an amount of incidence of solar ray into a room is adjusted in accordance with light controlling conditions and room temperature can be adjusted further finely. Further, in the case of the constitution described in Claim 11, the thickness of a total of the glass pane is not increased.

According to the constitution described in Claims 12 or 13, the light-controllable substance which can be obtained inexpensively can be adopted and the cost of producing the light-controllable glass can be reduced.

According to the constitution described in Claim 14, the glass pane is light-weighted and handling thereof is facilitated, the heat insulating performance of the glass pane is promoted and transfer of heat to and from a room at the glass pane portion can effectively be cut.

With the respect to the heat insulating window having light controlling performance according to Claim 15, only a necessary portion of the light-controllable glass can forcibly be switched to a light shielding state and accordingly, the light-controllable glass can be used as a substitute for a blind, a curtain, a display or the like and the light shielding portion can be set in an optimum state in accordance with request of a user. Further, according to the constitution described in Claim 16, by forming the light shielding portion in a shape of vertical strips or in a shape of lateral strips, environment of a room can be changed in accordance with feeling or the like of a user.

With respect to the heat insulating window having light controlling performance according to Claim 17, the light shielding portion is increased or decreased in steps by a change in outer air temperature or room temperature, the light-controllable glass operates as in a blind, a curtain or the like and accordingly, room environment can be brought into a proper state without installing separately a blind, a curtain or the like. Further, room temperature is brought into a proper state by the light-controllable glass and accordingly, cooling and heating cost can be reduced. Further, according to the constitution described in Claim 18, a pattern can be made to emerge on the glass face in accordance with a change in temperature and an atmosphere in a room can also be changed.

## Claims

1. A heat insulating window having a light controlling performance having a window frame and a frame integrated to an inner side of the window frame and integrated with a light-controllable glass as a glass pane at the frame, wherein the window frame and the frame are constituted by extruded articles made of a synthetic resin material.

2. A heat insulating window having a light controlling performance having a window frame and a frame integrated to an inner side of the window frame and integrated with a light-controllable glass as a glass pane at the frame, wherein one of the window frame and the frame is constituted by wood and other thereof is constituted by either of an extruded article made of a synthetic resin material and wood.

3. A heat insulating window having a light controlling performance having a window frame and a frame integrated to an inner side of the window frame and integrated with a light-controllable glass as a glass pane at the frame, wherein each of the window frame and the frame is constituted by a heat insulating frame having a room inner side division frame and a room outer side division frame both comprising extruded articles and a heat insulating member interposed between the both division frames.

4. A heat insulating window having a light controlling performance having a window frame and a frame integrated to an inner side of the window frame and integrated with a light-controllable glass as a glass pane at the frame, wherein one of the window frame and the frame is constituted by a heat insulating frame having a room inner side division frame and a room outer side division frame both comprising extruded articles and a heat insulating member interposed between the both division frames and other thereof is constituted by either of an extruded article made of a synthetic resin material and wood.

5. The heat insulating window having a light controlling performance according to Claim 3 or 4, wherein at least one of the room inner side division frame and the room outer side division frame of the heat insulating frame is constituted by an extruded article made of a synthetic resin material and the heat insulating member between the both division frames is omitted.

6. The heat insulating window having a light controlling performance according to any one of Claims 1 to 5, wherein a hollow profile extruded article is used as the extruded article.

7. The heat insulating window having a light controlling performance according to any one of Claims 3 to 5, wherein a hollow profile extruded article made of an aluminum alloy is used as the room outer side division frame.

8. The heat insulating window having a light controlling performance according to any one of Claims 1 to 7, wherein the heat insulating window is integrated with a sealed insulating glass at least one sheet of which comprises the light-controllable glass as the glass pane.

9. The heat insulating window having a light controlling performance according to Claim 8, wherein the light-controllable glass is arranged on an inner side of a room.

10. The heat insulating window having a light controlling performance according to any one of Claims 1 to 9, wherein the heat insulating window is integrated with a sealed insulating glass including two sheets or more of light-controllable glasses having different light controlling conditions as the glass pane.

11. The heat insulating window having a light controlling performance according to any one of Claims 1 to 10, wherein a plurality of layers of light-controllable substances having different light controlling conditions are laminated as the light-controllable glass.

12. The heat insulating window having a light controlling performance according to any one of Claims 1 to 11, wherein a material having a cloud point is sealed between two sheets of plate glasses or a light-controllable substance in a solid state having a cloud point is used as the light-controllable glass.

13. The heat insulating window having a light controlling performance according to any one of Claims 1 to 12, wherein a light-controllable substance comprising at least a water-soluble polymer having an average molecular weight of 10,000 through 200,000, an amphipathic substance having a molecular weight of 3,000 or less and water is used as the light-controllable glass.

14. The heat insulating window having a light controlling performance according to any one of Claims 1 to 11, wherein an organic glass is used as a plate glass constituting the glass pane.

15. The heat insulating window having a light controlling performance according to any one of Claims 1 to 14, further comprising:
a plurality of heating means integrally installed to the light-controllable glass for respectively and individually heating a plurality of regions on a glass face of the light-controllable glass; and
switching means for selectively conducting electricity to only a desired one of the heating means.

16. The heat insulating window having a light controlling performance according to Claim 15, wherein the heating means are installed such that the regions are constituted in a strip-like shape in a vertical direction and/or a lateral direction.

17. The heat insulating window having a light controlling performance according to any one of Claims 1 to 14, wherein a composition of the light-controllable substance is adjusted such that a temperature for changing a light transmittance is changed in steps from one side to other side of the light-controllable glass.

18. The heat insulating window having a light controlling performance according to any one of Claims 1 to 14, wherein a composition of the light-controllable substance is adjusted such that a plurality of the light-controllable substances having different compositions are arranged such that a pattern is formed on the glass face of the light-controllable glass and a temperature for changing the light transmittances of the plurality of light-controllable substances is changed in steps.
